(19) **Europäisches Patentamt**

**European Patent Office**

**Office européen des brevets**

(11) **EP 1 637 975 A1**

(12) **EUROPEAN PATENT APPLICATION**

(43) Date of publication:
22.03.2006 Bulletin 2006/12

(51) Int Cl.:
*G06F 3/00* (2006.01)

(21) Application number: 05011373.7

(22) Date of filing: 25.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.09.2004 KR 2004075134**

(71) Applicant: **SAMSUNG ELECTRONICS CO., LTD.**
**Suwon-si,**
**Gyeonggi-do (KR)**

(72) Inventors:
• **Min, Kyung-Tae**
**Yeongtong-gu**
**Suwon-si**
**Gyeonggi-do (KR)**
• **Kim, Youn-Ho**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for inputting keys using biological signals in head mounted display information terminal**

(57) Disclosed is an apparatus and method for inputting keys using biological signals in an HMD (Head Mounted Display) mobile information terminal. The apparatus provides a virtual screen that includes a key map and a preview window to a user through a display unit having a micro-display, recognizes and inputs a key selected according to the user's biological signals sensed through a biological signal sensing unit having an EOG (Electrooculogram) input unit and an EMG (Electromyogram) input unit for sensing and receiving the biological signals as key inputs. The apparatus recognizes through a recognition unit the key selected according to the user's biological signals sensed through a biological signal sensing unit. The user can freely use the HMD mobile communication terminal without using his/her hands because the user can input his/her desired key to the HMD information terminal only by the movement of the user's eyes and the biting of his/her right and left back teeth.

FIG.1

EP 1 637 975 A1

## Description

The present invention relates generally to a mobile information terminal having an HMD (Head Mounted Display) device, and more particularly to an HMD mobile information terminal that can perform a hands-free function.

Typically, a mobile information terminal is a personal mobile appliance in which a wireless communication function and an information processing function are combined. The mobile information terminal includes all kinds of mobile communication terminals such as a PDA (Personal Data Assistant) and a smart phone in addition to a mobile phone. An important advantage of the mobile information terminal is its portability, and thus many methods for increasing the portability of the mobile information terminal have appeared.

One such method currently being implemented is a method that uses an HMD (Head Mounted Display). Generally, the HMD is an image device that spreads an image before the user's eyes in a virtual-reality or augmented-reality system. The HMD has the shape of safety glasses or a helmet. Using the HMD, a user can control a computer through a virtual three-dimensional menu screen displayed by a micro-display instead of controlling a computer through a two-dimensional screen such as a monitor and a planar input device such as a keyboard or a mouse. For this, the HMD information terminal may include a display unit in the form of glasses that has an ultralight-weighted micro-display mounted thereon, a sensor capable of receiving a user's key input, an input device, etc.

In the HMD information terminal as described above, one of most important techniques is to provide a user with the ability input his/her desired keys. As key input devices of an HMD information terminal, a small-sized key input device the size of which is small enough to be worn by a user and send a signal that can be sensed by a sensor of the HMD. "Wrist Keyboard" produced by L3 System may be an example of the small-sized key input device. In the "Wrist Keyboard", a general computer keyboard is miniaturized enough to be mounted on the wrist of the user. Meanwhile, "Scurry" produced by Samsung Electronics Co., Ltd. may be an example of the wearable input device that sends a signal sensible by the HMD sensor. "Scurry" is a kind of mouse that can be mounted on the hand of the user just like a glove.

These devices input keys according to a user's movement or selection to a control unit of the HMD information terminal. Accordingly, the user can input desired keys using the devices. Specifically, "Scurry" is directly mounted on the body of the user, and inputs the user's movement. "Wrist Keyboard" is a subminiature keyboard that receives keys input by the other hand of the user on which the "Wrist Keyboard" is not mounted.

However, in using the HMD mobile information terminals, the users must manipulate the above-described input devices using both hands in order to input their desired keys, detracting from potential user-friendliness. Therefore, the users' inconvenience may be much greater than what users experience when they use typical mobile information terminals.

Nowadays, hands-free devices are in wide use. Typically, hands-free devices enable the users to freely conduct a phone call without taking a mobile phone in their hands. If the hands-free device is connected by wire to a mobile phone, a driver can make a phone call without taking the mobile phone in his/her hands. Although the hands-free device was first proposed as a mobile phone system for preventing traffic accidents, it has widely been used in general mobile information terminals due to the advantage that both hands of a user are free when the user uses the mobile information terminal.

However, the hands-free device as described above is nothing but an apparatus for indirectly transferring and inputting the voice of a user to a mobile information terminal through a small-sized microphone, or for indirectly transferring the voice of a caller to a user through a small-sized microphone. That is, in the mobile communication terminal provided with a typical hands-free device, the user can just use the hands-free device when he/she inputs his/her voice to the mobile information terminal or hears the voice of the caller, but still requires a key input through the user's hands when he/she makes a phone call or prepares a text message.

Meanwhile, the HMD mobile information terminal provided with the HMD has the same problem. In the case of the HMD information terminal, an input device for inputting a user's key is mounted on a user's body, and the user inputs the key using the input device. Accordingly, a hands-free device that may be provided in the HMD mobile information terminal has the limitations that the hands of the user can be free only when the user makes a phone call.

Accordingly, the present invention has been designed to solve at least the above and other problems occurring in the prior art.

It is the object of the present invention to provide an apparatus and method that can implement a complete hands-free in an HMD mobile information terminal.

This object is solved by the subject matter of the independent claims.

Preferred embodiments are defined by the subject matter of the dependent claims.

In order to accomplish the above, there is provided an apparatus for inputting keys using biological signals in an HMD (Head Mounted Display) mobile information terminal having an HMD. The apparatus includes a micro-display for displaying a virtual screen, a memory unit having a key information storage unit for storing key-map information of the virtual screen displayed by the micro-display, a biological signal sensing unit for sensing biological signals that include voltages produced from a face of a user, a recognition unit for recognizing the sensed biological signals and key information according to the recognized biological signals, and a control unit for recognizing the key information according to biological signals as an input of a specified key.

In accordance with another aspect of the present invention, there is provided a method for inputting keys using biological signals in an HMD (Head Mounted Display) mobile information terminal having an HMD. The method includes a virtual screen loading step for loading virtual screen information, a virtual screen display step for displaying a virtual screen according to the loaded virtual screen information, a biosensor checking step for checking a state of electrodes that receive biological signals produced from a face for a user, a step of sensing the biological signals, a key recognition step for recognizing keys according to the sensed biological signals, and a key input step for receiving a key value according to the key if the key is recognized.

The above object and other aspects, features and advantages of the present invention will be more apparent from the following detailed description taken in conjunction with the accompanying drawings, in which:

FIG. 1 is a block diagram illustrating a mobile communication terminal according to an embodiment of the present invention;

FIG. 2 is a detailed block diagram of a biological signal sensing unit according to an embodiment of the present invention;

FIG. 3 is a view illustrating an example of a mobile communication terminal according to an embodiment of the present invention;

FIG. 4 is a view illustrating a user's electrooculogram (EOG) according to an embodiment of the present invention;

FIGs. 5A, 5B and 5C are views illustrating examples of coordinates produced by an checked electrooculogram (EOG) and electromyogram (EMG) according to an embodiment of the present invention;

FIG. 6 is a graph illustrating an example of a key map that can be used in an embodiment of the present invention;

FIG. 7A is a view illustrating an example of a key map display screen of a mobile communication terminal according to an embodiment of the present invention;

FIG. 7B is a view illustrating an example of a menu display screen of a mobile communication terminal according to an embodiment of the present invention;

FIG. 8 is a flowchart illustrating a key input process of a mobile communication terminal according to an embodiment of the present invention;

FIG. 9 is a flowchart illustrating a key recognition process of a mobile communication terminal according to an embodiment of the present invention;

FIG. 10 is a detailed flowchart illustrating a menu selection process in a key input process of a mobile communication terminal according to an embodiment of the present invention;

FIG. 11 is a flowchart illustrating a process of inputting a recognized key in a mobile communication terminal according to an embodiment of the present invention;

FIG. 12 are views illustrating an exemplified process of inputting a character in a mobile communication terminal according to an embodiment of the present invention; and

FIG. 13 is a block diagram illustrating an electroencephalogram (EEG) sensing unit that can be added to a biological signal sensing unit according to an embodiment of the present invention.

Preferred embodiments of the present invention will be described in detail hereinafter with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention.

The present invention relates to a mobile information terminal that can be applied to all kinds of mobile information terminals. In the following description, however, a mobile communication terminal will be exemplified for the sake of convenience.

In the present invention, in order to implement complete hands-free operation as described above, keys are input using biological signals of a user. In the embodiment of the present invention, an electrooculogram (EOG) and an electromyogram (hereinafter referred to as an "EMG") are two examples of various biological signals.

The EOG is an electric signal generated according to the movement of a user's eyes due to a voltage difference between the corneas of the user's eyes, and the EMG is an electric signal generated when a muscle is contracted. In the case of using the EOG, the user can move a cursor to a desired key with considerable accuracy and at a high reaction speed. However, because the user must grasp external visual information using his/her eyes, it is difficult for the user to fixedly direct his/her eyes to a specified position while the user is moving. Even if the user can move the cursor to a direction intended by the user, the way to input the selected keys should additionally be provided. A technique for inputting the selected key by blinking the user's eyes has been proposed. If the user's eyes are directed to a different place when the user blinks his/her eyes, however, the key intended by the user may not be input, but a different key may erroneously be input instead.

In the case of using the EMG, the HMD mobile communication terminal can use the voltage difference produced when the user bites his/her back teeth. In this case, the user can move the cursor to the position of the intended key by biting his/her left or right back teeth. Although the HMD mobile communication terminal using the EMG has a very high reaction speed and a great reliability, it has the disadvantage that the user can select only three cases of biting the right back teeth, biting the left back teeth, and biting the both-side back teeth.

Accordingly, the present invention uses the EOG and the EMG to match their advantages, and enables a user to select and input a desired key from among the keys being displayed on a micro-display without using the user's hand.

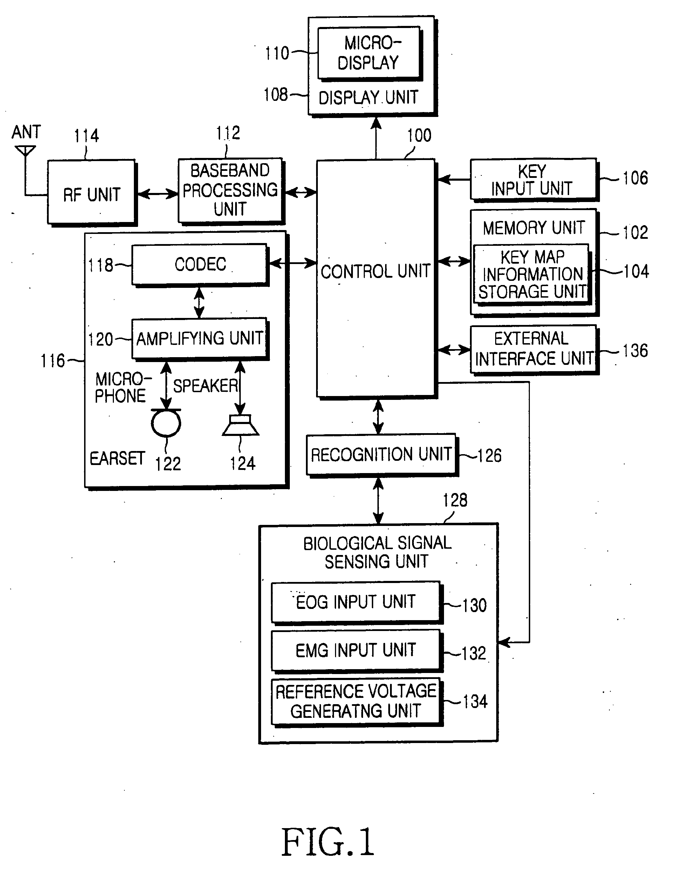

FIG. 1 is a block diagram illustrating a mobile communication terminal according to an embodiment of the present invention. Referring to FIG. 1, the mobile communication terminal includes a memory unit 102, a key input unit 106, a display unit 108, an RF (Radio Frequency) unit 114, a baseband processing unit 112, a codec (coder-decoder) 118, an external interface unit 136, a biological signal sensing unit 128, a recognition unit 126, and a control unit 100. The control unit 100 processes audio signals and data according to protocols for a phone call, data communication, or a wireless Internet connection, and controls all parts of the mobile communication terminal. Additionally, the control unit 100 operates to load and display a key map stored in the memory unit 102. The control unit 100 also controls the biological signal sensing unit 128 to sense biological signals of the user such as the EOG and EMG, and controls the recognition unit 126 to recognize the selection of the key using the biological signal sensed by the biological signal sensing unit 128.

The memory unit 102 connected to the control unit 100 of the mobile communication terminal according to the embodiment of the present invention comprises a ROM (Read Only Memory), a RAM (Random Access Memory), and a flash memory, and is provided with a key map information storage unit 104 for storing various kinds of key map information. The key input unit 106 includes a power on/off key and several option keys. In the embodiment of the present invention, the key input unit 106 of the mobile communication terminal, unlike a keypad of a conventional mobile communication terminal, is provided with only keys that cannot be executed through a user's menu selection using a virtual screen through a HMD such as the power on/off key or a virtual screen on/off key. The display unit 108 is provided with the HMD having a micro-display 110, and displays various kinds of information through a virtual three-dimensional screen under the control of the control unit 100. The RF unit 114 transmits/receives RF signals to/from a base station through an antenna ANT. The RF unit 114 converts a received signal into an IF (Intermediate Frequency) signal to output the IF signal to the baseband processing unit 112, and converts an IF signal input from the baseband processing unit 112 into an RF signal to output the RF signal.

The baseband processing unit 112 is a BBA (Baseband Analog ASIC) for providing an interface between the control unit 100 and the RF unit 114. The baseband processing unit 112 converts a digital baseband signal applied from the control unit 110 into an analog IF signal to provide the analog IF signal to the RF unit 114, and converts an analog IF signal applied from the RF unit 114 into a digital baseband signal to provide the digital baseband signal to the control unit 100. The codec 118 connected to the control unit 100 is connected to an earset 116 through an amplifying unit 120. In the embodiment of the present invention, the earset 116 is constructed with a microphone 122, a speaker 124, the codec 118, and the amplifying unit 120. The codec 118 performs a PCM (Pulse Code Modulation) encoding of a voice signal input from the microphone 122 to output voice data to the control unit 100, and performs a PCM decoding of voice data input from the control unit 100 to output a decoded voice signal to the speaker 124 through the amplifying unit 120. The amplifying unit 120 amplifies the voice signal input from the microphone or the voice signal output to the speaker, and adjust the volume of the speaker 124 and the gain of the microphone 122 under the control of the control unit 100. The external interface unit connected to the control unit 100 serves as an interface for connecting to an extended memory or an extended battery of the mobile communication terminal according to the embodiment of the present invention.

The biological signal sensing unit 128 includes an EOG input unit 130, an EMG input unit 132, and a reference voltage generating unit 134, and senses and inputs the biological signals of the user to the recognition unit 126. The EOG input unit 130 detects an EOG signal that reflects the movement of a user's eye by measuring the potential difference between a minute voltage generated according to the movement of the user's eye and a reference voltage when the user's eyes move. The EMG input unit 132 monitors a potential generated according to muscles of the user's face moved when the user bites his/her left or right back teeth. The recognition unit 126 receives the biological signals such as the EMG, EOG etc., from the biological signal sensing unit 128, and recognizes which key the user presently selects by determining the key selected according to the biological signals from key information of the key map being presently displayed.

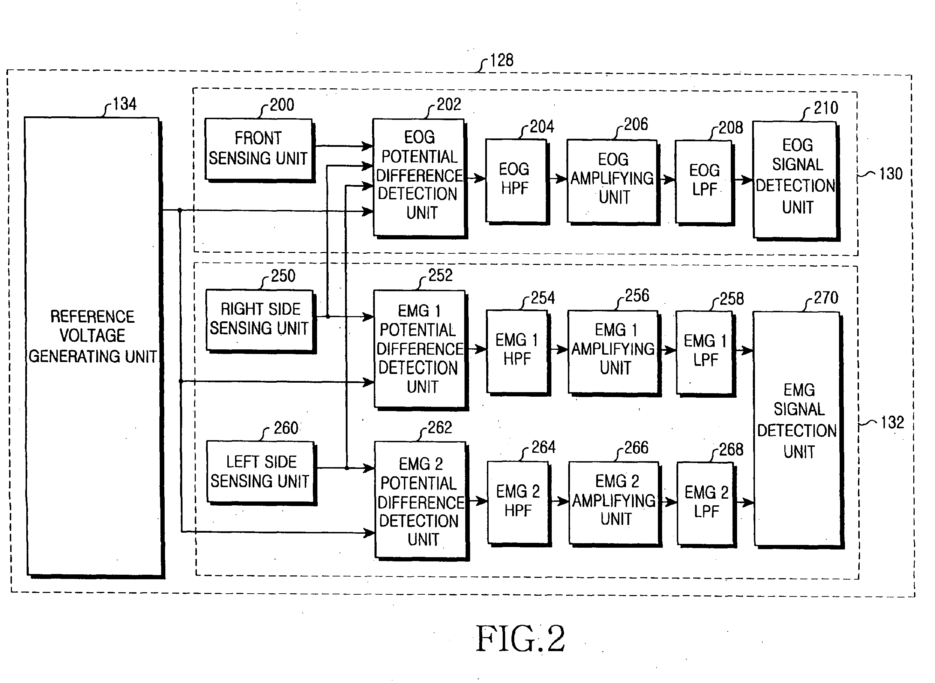

FIG. 2 is a detailed block diagram of a biological signal sensing unit according to an embodiment of the present invention. Referring to FIG. 2, the biological signal sensing unit 128 includes the reference voltage generating unit 134, the EOG input unit 130, and the EMG input unit 128 as illustrated in FIG. 1. Here, the reference voltage generating unit obtains a potential value generated from a reference electrode on the basis of a ground (GND) electrode among biological signal electrodes. In circuitry, the GND electrode and the reference electrode may separately be in contact with the user's body, or may be in contact with the user's body as the same electrode. Although it is recommended to separate the GND electrode from the reference electrode for a stable measurement of the biological signals, the GND electrode and the reference electrode are constructed as the same electrode in the embodiment of the present invention.

The EMG input unit 132 is briefly divided into a part for detecting a voltage produced by a right face muscle of the user and a part for detecting a voltage produced by a left face muscle of the user. Here, it is defined that an EMG1 signal is the EMG signal sensed from the right face muscle of the user, and an EMG2 signal is the EMG signal sensed from the left face muscle of the user.

The EMG input unit 132 includes a right side sensing unit 250 for sensing a voltage generated from a right head temple part of the right face muscle of the user, an EMG1 potential difference detection unit 252 for detecting a potential difference between an EMG1 voltage input from the right side sensing unit 250 and a reference voltage input form the reference voltage generating unit 134 by comparing the EMG1 voltage with the reference voltage, an EMG1 HPF (High Pass Filter) 254 for receiving the potential difference signal input from the EMG1 potential difference detection unit 252 as the EMG1 signal and removing a noise of a DC component from the EMG1 signal, an EMG1 amplifying unit 256 for receiving and amplifying the EMG1 signal from which the noise of the DC component has been removed, and an EMG1 LPF (Low Pass Filter) 258 for receiving the amplified EMG1 signal and removing a noise that is not the DC component from the DMG1 signal. Additionally, the EMG input unit 132 includes a left side sensing unit 260 for sensing a voltage generated from a left head temple part of the left face muscle of the user, an EMG2 potential difference detection unit 262 for detecting a potential difference between an EMG2 voltage input from the left side sensing unit 260 and a reference voltage input form the reference voltage generating unit 134 by comparing the EMG2 voltage with the reference voltage, an EMG2 HPF (High Pass Filter) 264 for receiving the potential difference signal input from the EMG2 potential difference detection unit 262 as the EMG2 signal and removing a noise of a DC component from the EMG2 signal, an EMG2 amplifying unit 266 for receiving and amplifying the EMG2 signal from which the noise of the DC component has been removed, and an EMG2 LPF (Low Pass Filter) 268 for receiving the amplified EMG2 signal and removing a noise that is not the DC component from the DMG2 signal. Additionally, the EMG input unit 132 includes an EMG signal detection unit for receiving the EMG1 signal and the EMG2 signal from the EMG1 LPF 258 and the EMG2 LPF 268 and detecting if only the EMG1 signal is input (i.e., if the user bites his/her right back teeth only), if only the EMG2 signal is input (i.e., if the user bites his/her left back teeth only), or if both the EMG1 signal and the EMG2 signal are input (i.e., if the user bites his/her left and right back teeth).

If the user bites his/her left back teeth, a corresponding EMG2 signal is generated and input to the EMG signal detection unit 270 through the EMG2 potential difference detection unit 262, the EMG2 HPF 264, the EMG2 amplifying unit 266, and the EMG2 LPF 268. If the user bites his/her right back teeth, a corresponding EMG1 signal is generated and input to the EMG signal detection unit 270 through the EMG1 potential difference detection unit 252, the EMG1 HPF 254, the EMG1 amplifying unit 256, and the EMG1 LPF 258. The EMG signal detection unit 270 determines if either of the EMG1 signal and the EMG2 signal is input or both the EMG1 signal and the EMG2 signal are input, and inputs the determined signal to the recognition unit 126.

The EOG input unit 130 includes a front sensing unit 200 including sensors positioned in a forehead part and in upper parts of a nose of the user (i.e., in positions of nose pads of the glasses), an EOG potential difference detection unit 202 for determining potential differences by comparing the voltages sensed by the right side sensing unit 250 and the lift side sensing unit 260 with the reference voltage input from the reference voltage generating unit 134, respectively, an EOG HPF 204 for receiving the measured potential difference signal and removing a noise of a DC component from the potential difference signal, an EOG amplifying unit 206 for receiving and amplifying the EOG signal from which the noise of the DC component has been removed, an EOG LPF 208 for detecting an EOG component from the amplified signal, and an EOG signal detection unit 210 for determining the direction of a user's eyes using the measured EOG.

If the user moves his/her eyes, a corresponding EOG signal is detected and input to the EOG signal detection unit 210 through the EOG potential difference detection unit 202, the EOG HPF 204, the EOG amplifying unit 206, and the EOG LPF 208. The EOG signal detection unit 210 determines the movement of the user's eyes according to the input EOG signal, and inputs the detected signal to the recognition unit 126. The recognition unit 126 recognizes the key selected by the user from among the key map information loaded from the key map storage unit 104 of the memory unit 102 using the signal input through the EMG signal detection unit 270 and the EOG signal detection unit 210, and inputs the key signal to the control unit 100.

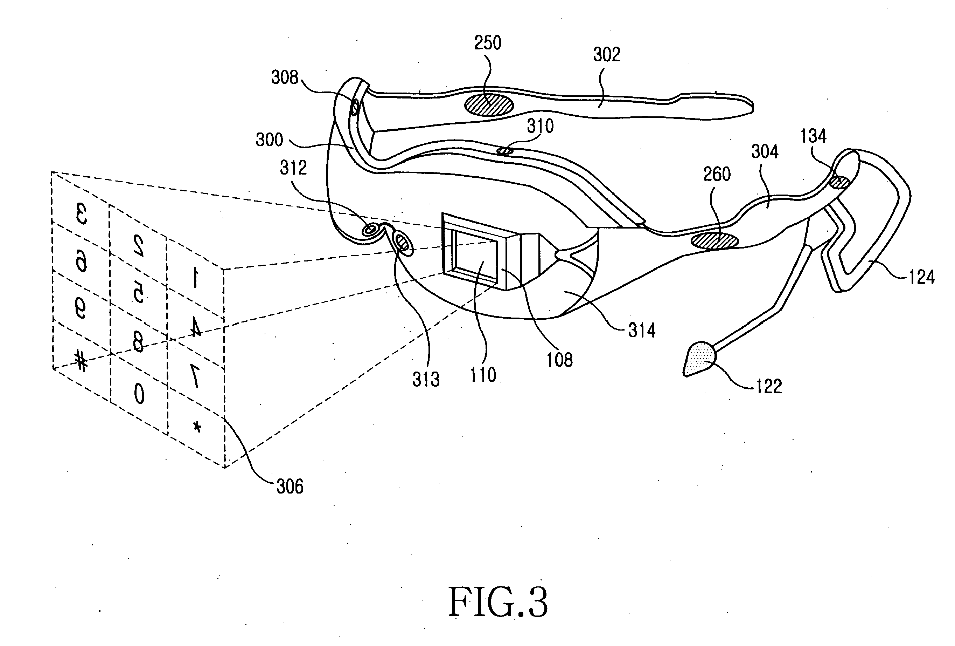

FIG 3 is a view illustrating an example of a mobile communication terminal according to an embodiment of the present invention. Referring to FIG 3, the mobile communication terminal according to the embodiment of the present invention has the shape of goggles. The display unit 108 according to the present invention is provided in glasses 314 as illustrated in FIG. 3, and in the display unit 108, the micro-display 110 is provided. The micro-display 110 displays the key map screen or a menu screen of the mobile communication terminal as a virtual screen. FIG. 3 illustrates an example of a virtual screen of a key map 306 being displayed on the micro-display 110. Although the micro-display 110 is provided on the left side of the glasses 314, it may be provided on the right side of the glasses 314 as needed.

The biological signal sensing unit 128 illustrated in FIG. 1 is positioned in a glass frame 300 of the mobile communication terminal. The biological signal sensing unit 128 includes a plurality of sensors for sensing voltages produced from the face of the user, that is, a front sensing unit 200, a left side sensing unit 250, and a right side sensing unit 260 as illustrated in FIG. 2. As described above with reference to FIG. 2, the front sensing unit 200 includes sensors (250, 260, 308, 310, 312 and 313), positioned in a forehead part and in an upper part of the nose of the user, for sensing voltages according to the movement of the user's eyes.

As illustrated in FIG. 3, a sensor 308 of the front sensing unit 200, which comes in contact with the right forehead of the user, is positioned in a upper right glass frame part of the glasses 314, and a sensor 310, which comes in contact with the left forehead part of the user, is positioned in a upper left glass frame part of the glasses 314. In the nose pads of the mobile communication terminal, sensors 312 and 313 for sensing minute voltages produced from the upper parts of the nose are positioned. Additionally, in a right temple part 302 of the glasses, a sensor of the right side sensing unit 250 for sensing the voltage of a right part of the face muscle of the user is positioned, and in a left temple part 304 of the glasses, a sensor of the left side sensing unit 260 for sensing the voltage of a left part of the face muscle of the user is positioned. The sensors as described above sense the changes of minute voltages produced from the respective parts of the user's face, and the biological signal sensing unit 128 receives inputs of key selection input according to the biological signals from the user by comparing the sensed voltages with the reference voltage generated from the reference voltage generating unit 134 positioned in an end part of the left temple 304 of the glasses illustrated in FIG. 3.

In the embodiment of the present invention, the earset 116 as illustrated in FIG 3 is provided. In FIG. 3, the earset 116 includes the microphone 122 and the speaker 124, and is in close contact with the ear part of the user. Additionally, the earset 116 includes the codec 118 and the amplifying unit 120, and is constructed in a body with the microphone 122 and the speaker 124. The other constituent elements such as the key input unit 106, the memory unit 102, the external interface unit 136, the baseband processing unit 112, the RF unit 114, etc., are built in the right and the left temple parts 302 and 304. For example, the key input unit 106, the memory unit 102, and the external interface unit 136 may be built in the right temple part 302, while the baseband processing unit 112 and the RF unit 114 may be built in the left temple parts 304. The external interface unit 228 is an interface for connecting an extended memory, an extended battery, etc., to the mobile communication terminal according to the present invention, and may be provided with a built-in interface port or a wired interface port. Accordingly, using the external interface unit 228, a notebook PC, a post PC, etc., may receive the input of the keys selected among the keys being displayed on the micro-display in accordance with the biological signal of the user.

In the embodiment of the present invention, the HMD mobile communication terminal as illustrated in FIG. 3 has been proposed, and the biological signal sensing unit 128, recognition unit 126, and control unit 100 are built in the frame part of the glasses 314 while the other constituent elements are built in the right temple part 302 and the left temple part 304. However, it will be apparent that such positions may be changed without limit as needed.

Additionally, in the embodiment of the present invention, six sensors for sensing the biological signals of the user, which include the sensors 308 and 310 positioned in the upper right and left parts of the frame of the glasses 314, the sensors 312 and 313 positioned in the right and left nose pad parts, and the sensors 250 and 260 positioned in the right and left temple parts 302 and 304, are provided in total. However, in order to heighten the sensing performance of the EMG or EOG signal, the number of sensors may be increased, or if the sensing capability of the sensors are sufficient, the number of sensors may be decreased. Therefore, the present invention is not limited to the embodiment as illustrated in FIG. 3.

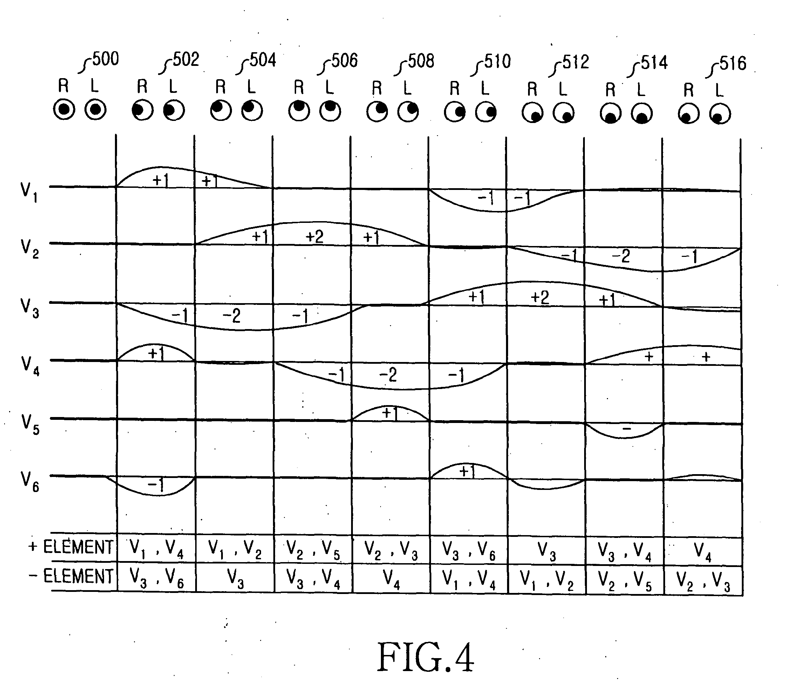

FIG 4 is a view illustrating that the potential differences detected through the EOG potential difference detection unit 202 are changed according to the positions of the user's eyes. Referring to FIG. 4, it can be seen that the differences between the voltages sensed by the front sensing unit 200, the right side sensing unit 250, and the left side sensing unit 260 and the reference voltage generated from the reference voltage generating unit 134 change according to the position of the user's eyes. In FIG. 4, V1 indicates the potential difference between the reference voltage and the voltage sensed by the right side sensing unit 250, V2 indicates the potential difference between the reference voltage and the voltage sensed by the sensor 308 of the front sensing unit 200 positioned in the right forehead part, and V3 indicates the potential difference between the reference voltage and the voltage sensed by the sensor 312 of the front sensing unit 200 positioned in the right nose pad part. Additionally, V4 indicates the potential difference between the reference voltage and the voltage sensed by the sensor 313 of the front sensing unit 200 positioned in the left nose pad part, V5 indicates the potential difference between the reference voltage and the voltage sensed by the sensor 310 of the front sensing unit 200 positioned in the left forehead part, and V6 indicates the potential difference between the reference voltage and the voltage sensed by the left side sensing unit 260. The above-described potential differences are shown in Table 1 below.

[Table 1]

| Voltage | Sensor Position | Sensing Unit |
|---------|-----------------|--------------|
| V1 | Right Temple Part 302 | Right Side Sensing Unit 250 |
| V2 | Upper Right Frame Part 308 | Front Sensing Unit 200 |
| V3 | Right Nose Pad Part 312 | Front Sensing Unit 200 |

Table continued

| Voltage | Sensor Position | Sensing Unit |
|---------|-----------------|--------------|
| V4 | Left Nose Pad Part 313 | Front Sensing Unit 200 |
| V5 | Upper Left Frame Part 310 | Front Sensing Unit 200 |
| V6 | Left Temple Part 304 | Left Side Sensing Unit 260 |

Referring to FIG. 4, it can be seen that the potential differences in the range of V1 to V6 change according to the position of the user's eyes. For example, if the user turns his/her eyes to the right 502, positive (+) EOG signals of V1 and V4 are produced from the right face of the user (i.e., the right temple part) and the left nose pad part of the user's glasses. In this case, negative (-) EOG signals are produced from the right nose pad part and the left face of the user (i.e., the left head temple part). If the user turns his/her eyes upward 506, positive (+) EOG signals of V2 and V5 are produced from the right forehead part and the left forehead part of the user, and negative (-) EOG signals are produced from the right nose pad part and the left nose pad part of the user's glasses.

If the user turns his/her eyes to the left 516, positive (+) EOG signals of V3 and V6 are produced from the right nose pad part of the user's glasses and the left head temple part of the user, and negative (-) EOG signals are produced from the right head temple part of the user and the left nose pad part of the user's glasses. If the user turns his/her eyes downward 514, positive (+) EOG signals of V3 and V4 are produced from the right nose pad part of the user's glasses and the left forehead part of the user, and negative (-) EOG signals are produced from the right forehead part and the left forehead part of the user. Accordingly, different positive and negative EOG signals are produced from the sensors of the respective positions in accordance with the turning direction of the user's eyes.

As described above, using that the EOG signals measured by the respective sensors are constantly changed according to the movement of the user's eyes, it becomes possible to recognize the direction of the user's eyes. Accordingly, coordinates can be obtained from the values produced according to the potential differences of the EOG signals using Equations (1) and (2).

$$Yh = (V1 + V4) - (V3 + V6) \qquad \ldots\ldots (1)$$

$$Yv = (V2 + V5) - (V3 + V4) \qquad \ldots\ldots (2)$$

In virtual two-dimensional coordinates, Equation (1) is an equation that calculates horizontal coordinate values for making coordinates of the horizontal movement of the eyes from the EOG signals measured by the respective sensors illustrated in FIG. 4, and Equation (2) is an equation that calculates vertical coordinate values for making coordinates of the vertical movement of the eyes from the EOG signals measured by the respective sensors illustrated in FIG. 4. Because it is possible to obtain the vertical and horizontal coordinates according to the movement of the user's eyes using optionally substituted values illustrated in FIG. 4 and Equations (1) and (2), the coordinate positions according to the movement of the user's eyes can be obtained.

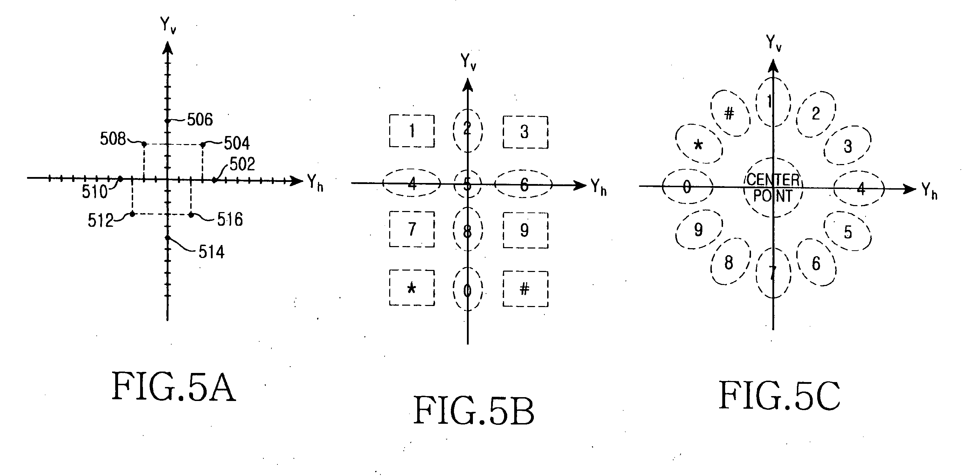

FIGs. 5A, 5B and 5C are views illustrating examples of coordinates produced according to the movement of the user's eyes and corresponding key maps that can be used in the embodiment of the present invention.

FIG. 5A illustrates coordinate positions set for the respective positions to which the user's eyes are directed using the optionally substituted values illustrated in FIG. 4 and Equations (1) and (2). Referring to FIG 5A, if the user turns his/her eyes to the right (case 502) from the center position, a value '4' is calculated through Equation (1), and a value '0' is calculated through Equation (2). Accordingly, the case 502 corresponds to the coordinates (4,0) in FIG. 5A. If the user turns his/her eyes to the upper right (case 504), a value '3' is calculated through Equation (1), and a value '3' is calculated through Equation (2). Accordingly, the case 504 corresponds to the coordinates (3,3). If the user turns his/her eyes upward (case 506), a value '0' is calculated through Equation (1), and a value '5' is calculated through Equation (2). Accordingly, the case 506 corresponds to the coordinates (0,5). The coordinate values of cases 508, 510, 512, 514, 514 and 518 can be calculated in the same manner. Consequently, all the coordinate values as illustrated in FIG. 5A are calculated. In the present invention, the coordinate values of the positions to which the user's eyes are directed are calculated by sensing voltages produced according to the movement of the user's eyes, comparing the sensed voltages with the reference voltage, and processing the differences between the sensed voltages and the reference voltage using the equations. Accordingly, the mobile communication terminal according to the embodiment of the present invention can recognize the position to which the user's eyes are directed by detecting the movement of the user's eyes only. Although in the embodiment of the present invention, fixed values '+1', '0', and '-1' are used, the movement of the eyes can be freely expressed as the coordinates using the EOG signals (real numbers) actually measured from the respective electrodes. That is, the cursor for the key selection can freely be moved only by the movement of the eyes.

FIGs. 5B and 5C illustrate the key map screen on which the user can input the keys using the recognized position to which the user's eyes are directed. Referring to FIG. 5B, a key map that is similar to that of the general mobile communication terminal is provided. The user can select keys in the range of 1 to 9 on the key map. As described above, the keys are selected by the positions to which the user's eyes are directed. More than 9 keys are provided in the typical mobile communication terminal. In the present invention, the time for which the movement of the user's eyes is sensed in order to select keys '*', '0', and '#' on the key map as illustrated in FIG. 5B. That is, if the user is looking at the front, it is recognized that the key '5' is selected by the turning direction of the user's eyes, and the key selection cursor is set to the key '5'. If the user turns his/her eyes downward, it is recognized that the key '8' is selected by the user's EOG signal, and the key selection cursor is set to the key '8'. Accordingly, the user can select a desired key by turning his/her eyes to the corresponding position.

FIG. 5A illustrates the case that the user's eyes are turned upward, left, and then downward from a state that the user's eyes are directed to the right, to draw a circle. In FIG 5A, it can be seen that the positions recognized by the mobile communication terminal in accordance with the movement of the user's eyes are moved to draw a circle. This means that it is possible to set and use a circular key map in addition to the typical key map illustrated in Fig. 5B. An example of such a key map arranged in a circle is illustrated in FIG. 5C. In the embodiment of the present invention, the mobile communication terminal may be provided with diverse types of key maps as illustrated in FIG 5C in addition to the typical key map illustrated in FIG 5B. Accordingly, in the present invention, the user can move the key selection cursor to a desired key on the presently displayed key map according to the position to which the user's eyes are directed.

Even if the user has moved the key selection cursor to the desired key, it is impossible to input a 'confirm' signal for inputting the selected key using the EOG signal of the user only. Although a technique for inputting the selected key by blinking the user's eyes has been proposed, it may malfunction because the user should select a desired key using his/her eyes and then blink his/her eyes in a state that he/she fixes his/her eyes. In the present invention, the EMG signals are used in order for the user to directly input the key after he/she selects the key using his/her eyes.

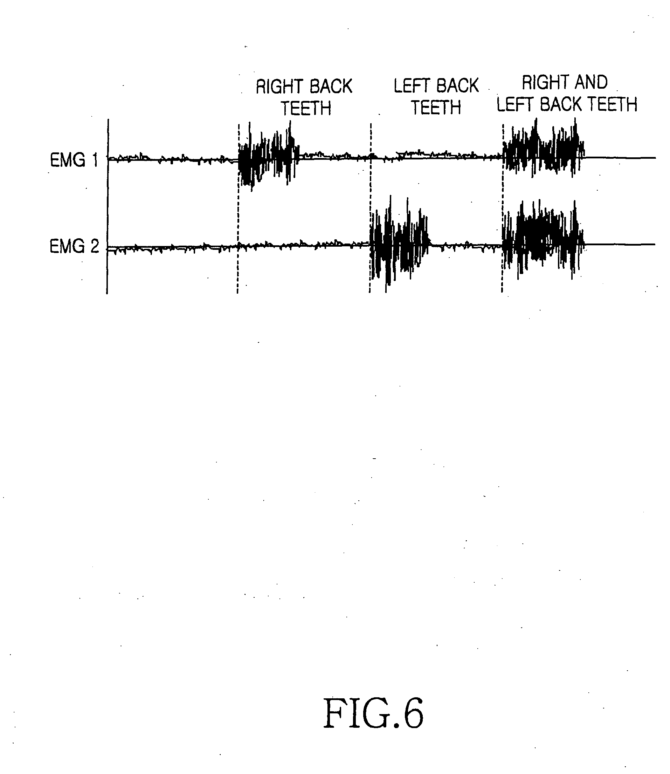

FIG. 6 is a graph illustrating an example of EMG signals input from a sensor of the left side sensing unit 260 provided in the left temple part 304 and a sensor of the right side sensing unit 250 provided in the right temple part 302 in the mobile communication terminal as illustrated in FIG. 3. In FIG. 6, it is defined that the EMG signal sensed while the user bites his/her right back teeth is an EMG1 signal, and the EMG signal sensed while the user bites his/her left back teeth is an EMG2 signal. Referring to FIG. 6, at the moment the user bites his/her right back teeth, high-frequency components (generally in the range of 100 to 2000Hz) are produced from the right head temple of the user. Meanwhile, at the moment the user bites his/her left back teeth, high-frequency components (generally in the range of 100 to 2000Hz) are produced from the left head temple of the user. Also, at the moment the user bites his/her left back teeth, a voltage higher than the reference voltage generated from the reference voltage generating unit 134 is produced from the left head temple of the user. In the embodiment of the present invention, the mobile communication terminal can sense the change of such voltages through the right side sensing unit 250 and the left side sensing unit 260, and recognize if the user bites the right back teeth, the left back teeth, or both the right and left back teeth through the EMG signal detection unit 270. Using this EMG signals, three kinds of signals intended by the user can be input. In the embodiment of the present invention, one of three EMG signals, and especially the EMG signal corresponding to the case that the user bites both the right and left back teeth, is used as the 'confirm' signal of the user.

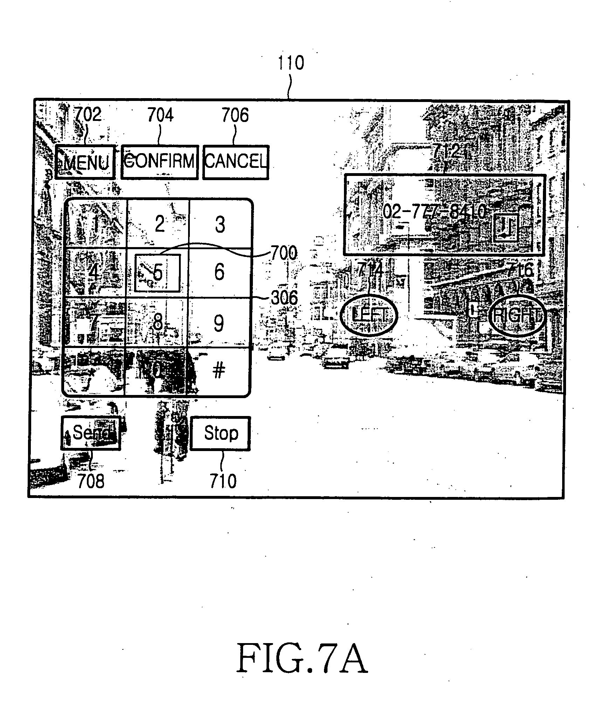

Accordingly, the user can select and input a desired key without limit. FIG. 7A is a view illustrating an example of a key map display screen of a mobile communication terminal according to an embodiment of the present invention. Referring to FIG. 7A, the user can select and input a desired key on the key map 306 displayed by the micro-display 110 as illustrated in FIG 5B. On the left side of the display screen, a 'menu' key 702 for selecting a menu, a 'confirm' key 704, a 'cancel' key 706, a key map 306, a 'send' key 708 for sending a call destination signal to an input phone number, and a 'stop' key 710 for canceling all operations are provided. Additionally, on the right side of the display screen, a preview window 712 for previewing a phone number input by the user, and left and right movement keys 714 and 716 for moving a cursor of the preview window 712 to the left and right are provided.

In the embodiment of the present invention, if the user turns on the virtual screen mode of the mobile communication terminal, he/she can see the initial screen as illustrated in FIG. 7A. Here, a key setting cursor 700 is set to a position (e.g., a key '5' in FIG. 5A) set as default. If the user turns his/her eyes downward in this state, the key setting cursor 700 moves downward and is set to a key '0'. At this time, if the user bites both-side back teeth, '0' is input in the preview window 712 as illustrated in FIG. 7A. Additionally, if the user continuously turns his/her eyes upward, the key setting cursor continuously moves up to a position of a key '2'. At this time, if the user bites both-side back teeth again, '2' is input in the preview window 702. Accordingly, the figures '02' are input in the preview window 702. After the user inputs a phone number '02-770-8410' in the above-described manner as illustrated in FIG 7A, he/she simultaneously inputs the EMG1 signal (e.g., the signal for reporting that the right back teeth are bitten) and the EMG2 signal (e.g., the signal for reporting that the left back teeth are bitten) to the control unit of the mobile communication terminal by moving the key setting cursor 700 to the 'send' key positioned below the key '0' through turning of the user's eyes downward and then by biting both-side back teeth. Then, the control unit of the mobile communication terminal send a call destination signal to the phone number presently input in the preview window 712.

If the user wrongly inputs the key, he/she can move the cursor of the preview window 712 by biting either of the right back teeth and the left back teeth and selecting any one of the left movement key 714 and the right movement key 716. Additionally, the user may select another key and input the key onto the position in which the cursor is positioned instead. In the mobile communication terminal according to the embodiment of the present invention, the user can input and make a call with the desired phone number only by moving his/her eyes and biting his/her left and right back teeth.

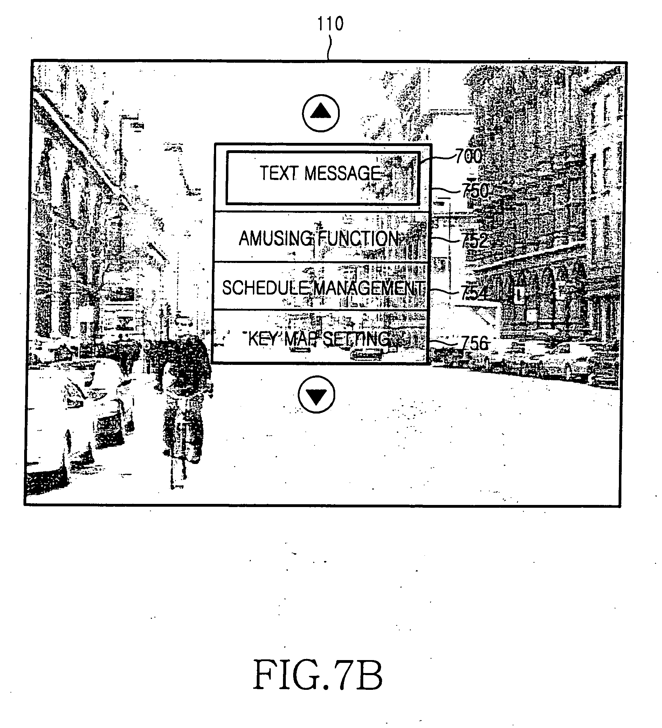

FIG. 7B is a view illustrating an example of a menu selection screen that is displayed when the user selects the menu key 702 as illustrated in FIG. 7A. Referring to FIG. 7B, menus displayed on the menu selection screen may be a text message menu 750 for a text message function, a menu 752 for using diverse entertainment functions such as a game, a schedule management key 754 for managing the schedule of the user and so on, and a key map setting menu 756 for selecting a desired type or kind of a key map.

Here, the key map setting menu 756 is a menu for enabling the user to select a desired key map to improve the user interface. In this menu, the user can set the kind and type of a key map. Specifically, the user can set a desired type of a key map among diverse types of key maps including the typical key map as illustrated in FIG. 5B and the circular key map as illustrated in FIG. 5C. The user can also set the kind of a key map through the key map setting menu 756. Generally, manufacturers of mobile communication terminals have different kinds of key maps as shown in Tables 2 and 3 below.

[Table 2]

| 1 丨 QZ | 2 ㅇ ABC | 3 — DEF |
|---|---|---|
| 4 ㅋ GHI | 5 JKL | 6 ㄷ MNO |
| 7 ㅂ PRS | 8 ㅅ TUV | 9 ㅈ WXY |
| ㄱ | ㄴ 0 ㅇ ㅁ | |

[Table 3]

| 1 ㄱ @: | 2 ㄴ ABC | 3 ㅏ ㅓ DEF |
|---|---|---|
| 4 ㄹ GHI | 5 ㅁ JKL | 6 ㅗ ㅜ MNO |
| 7 ㅅ PQRS | 8  O TUV | 9 丨 WXYZ |
| | 0 — | |

Tables 2 and 3 show key maps used by different manufacturers of mobile communication terminals. Specifically, Table 2 refers to a key map used in mobile communication terminals manufactured by Samsung Electronics Co., Ltd., and Table 3 refers to a key map used in mobile communication terminals manufactured by LG Electronics Inc. Referring to Tables 2 and 3, it can be seen that there is a great difference between the two key maps. Accordingly, users, who are familiar with the mobile communication terminals manufactured by Samsung Electronics Co., Ltd., may experience difficulty in using the mobile communication terminals manufactured by LG Electronics Inc, and vice versa. In the present invention, information about key maps used by respective manufacturers are stored in the key map information storage unit 104, and a key map of a manufacturer of mobile communication terminals with which the user is familiar is selected and used by the user.

Referring again to FIG. 7B, it can be seen that respective menus are displayed in the form of a vertical scroll. This is for the user to select the menus only through an input of the EMG 1 signal or the EMG2 signal. If the user input the EMG1 signal by biting his/her right back teeth when such a menu screen is displayed, the key setting cursor 700 moves step by step in an upper direction. If the user inputs the EMG2 signal by biting his/her left back teeth, the key setting cursor 700 moves step by step in a lower direction. Additionally, if the user simultaneously inputs the EMG1 signal and the EMG2 signal by simultaneously biting his/her left and right back teeth when he/she confirms that the key setting cursor has moved to a desired menu, the corresponding menu is selected.

Although the menus displayed in the form of a vertical scroll are illustrated in FIG. 7B, it will be apparent that the menus may be displayed in a horizontal direction, i.e., in the form of a horizontal scroll. In this case, if the user bites his/her right back teeth, the key setting cursor 700 moves to the right, while if the user bites his/her left back teeth, the key setting cursor 700 moves to the left. Accordingly, the user can select the desired menu among the displayed menus by moving the cursor 700 by biting his/her right and left back teeth without moving the user's eyes.

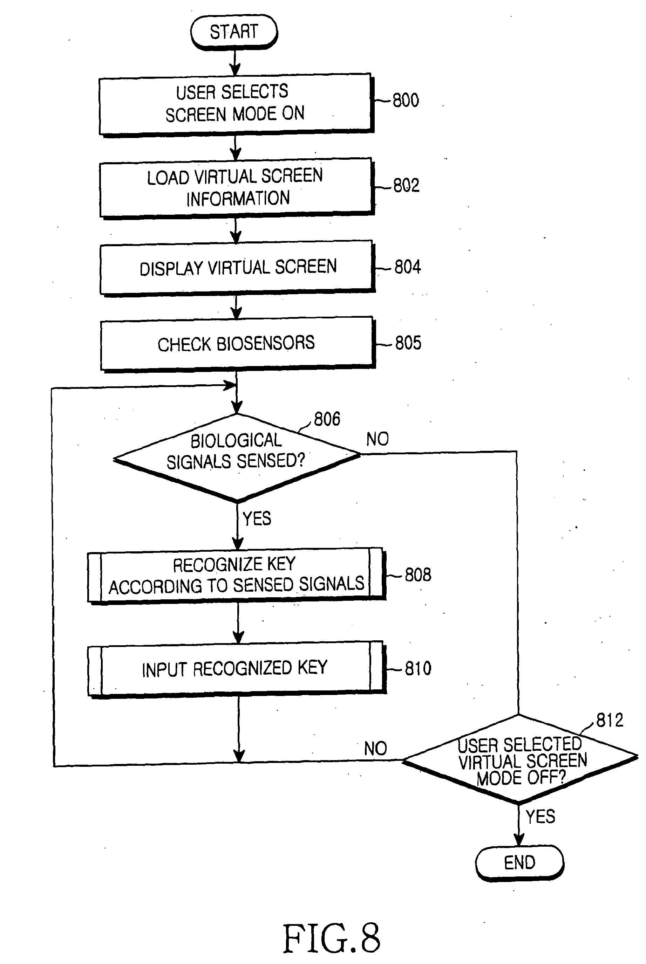

FIG. 8 is a flowchart illustrating a process of recognizing a key input from a user and receiving an input of the key according to an embodiment of the present invention. Referring to Fig. 8, if the user turns on a virtual screen mode at step 800, the control unit 100 proceeds to step 802, and loads information about the virtual screen set by the user from the memory unit 102. A menu 'virtual screen mode on' refers to a case that a user turns on a power switch of a mobile communication terminal or a virtual screen mode is switched. For example, the menu 'virtual screen mode on' refers to a case that the user switches the present menu screen to a screen on which the user can prepare a text message or the user switches the screen for preparing the text message to a screen for transmitting a call destination signal. In this case, information about the virtual screen includes information about the type and the kind of a key map to be displayed and information about whether the key map being presently displayed as a character key map or a numeral key map. For example, if the user selects a text message menu 750 from the menu screen, the virtual screen information includes the information about the displayed key map that is the character key map.

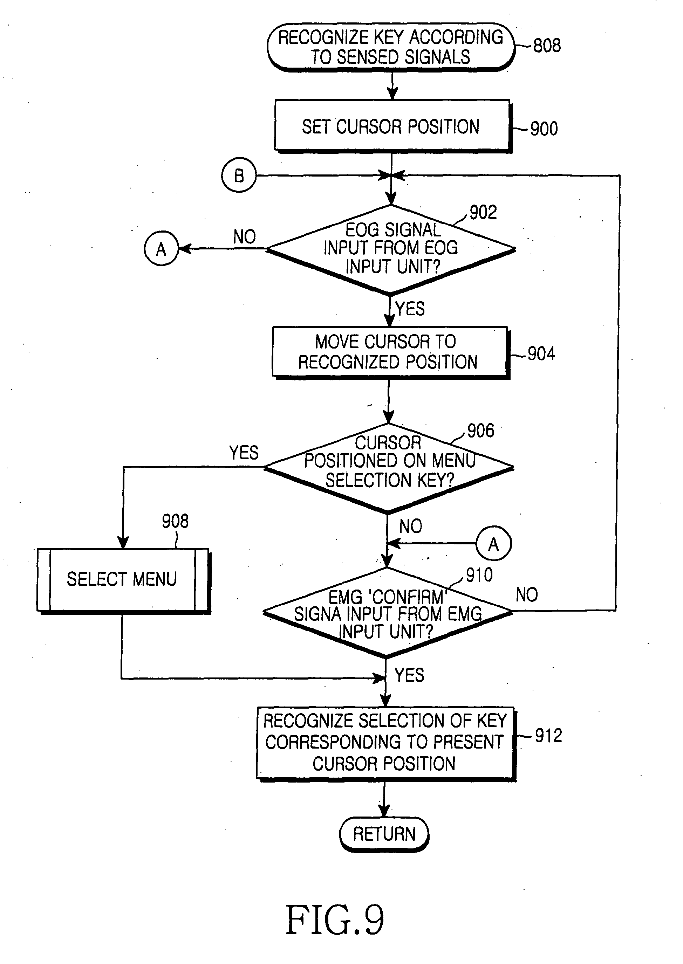

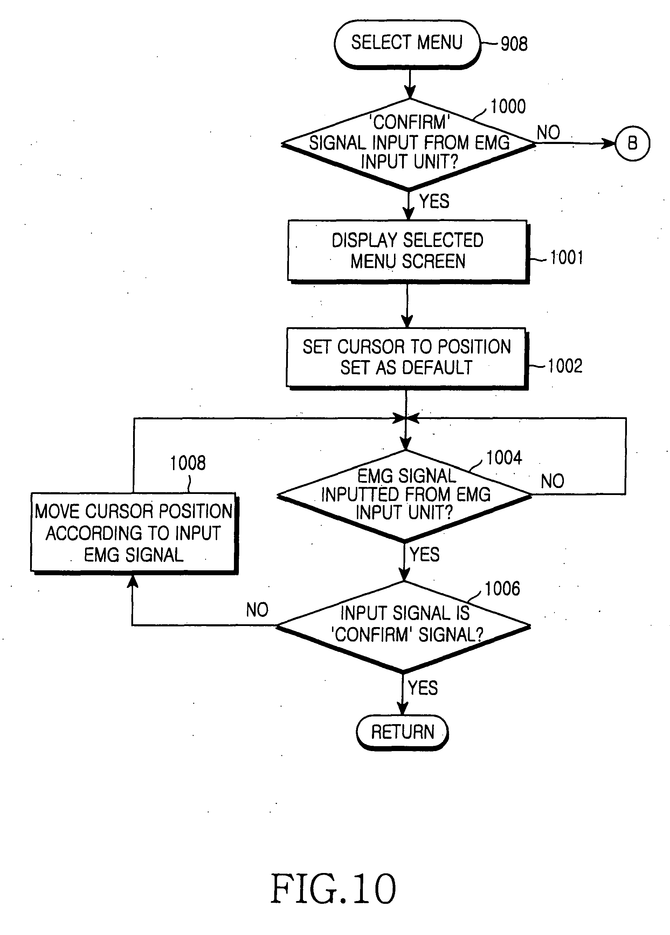

If the information about the virtual screen is loaded at step 802, the control unit 100 controls the micro-display 110 of the display unit 108 to display a virtual screen according to the virtual screen information at step 804. The control unit 100 proceeds to step 805, and determines if electrodes for receiving the biological signals are in proper contact with the user's body or if the electrodes are in an abnormal state before the measurement of the biological signals. If it is determined that the electrodes are in an abnormal state, the control unit 200 operates to send a message (in the form of a warning sound and/or text) for making the user confirm the state of the electrodes. Then, the control unit 200 proceeds to step 806, and confirms if the biological signals, i.e., the EMG signal and the EOG signal, are input from the user. If the biological signals are input from the user, the control unit 200 proceeds to step 808, and recognizes the selected key according to the biological signals from the user. Then, the control unit 100 proceeds to step 810, and receives an input of key values selected by the user. Now, the key recognition process according to the biological signals from the user at step 808 will be explained in more detail with reference to FIG. 9. Additionally, the process of selecting the key values recognized according to the biological signals from the user will be explained in more detail with reference to FIG. 10.

If the biological signals are not sensed at step 806, the control unit 100 proceeds to step 812, and confirms if the user has selected a 'virtual screen mode off'. If the user has selected the 'virtual screen mode off', the control unit 100 terminates the present virtual screen mode. By contrast, if the user has not selected the 'virtual screen mode off', the control unit 100 proceeds again to step 806, and confirms if the user inputs the keys by determining if the biological signals of the user are received.

FIG. 9 is a flowchart illustrating a key recognition process of a mobile communication terminal according to the signals sensed at step 808 illustrated in FIG. 8. Referring to FIG. 9, the control unit 100 sets the key setting cursor 700 to a position set as default at step 900. Then, the control unit 100 proceeds to step 902, and determines if the EOG signal for moving the key setting cursor 700 is input from the user. If the EOG signal is input from the user, the control unit 100 recognizes the EOG signal, and moves the key setting cursor 700 to the recognized position at step 904. If the key setting cursor 700 is moved according to the EOG signal at step 904, the control unit 100 proceeds to step 906, and confirms if the key setting cursor is positioned on the menu selection key. If the key setting cursor 700 is not positioned on the menu selection key 702, the control unit 100 proceeds to step 910, and confirms if the EMG signals that correspond to the 'confirm' key, i.e., the EMG1 signal input by the user's biting of his/her left back teeth and the EMG2 signal input by the user's biting of his/her right back teeth, are simultaneously produced. If the EMG1 signal and the EMG2 signal are simultaneously input, the control unit 100 proceeds to step 912, and recognizes that the key, to which the key setting cursor 700 is set, is selected by the user.

If the 'confirm' signal is not input from the user at step 910, the control unit 100 proceeds again to step 902, and confirms if the EOG signal is input from the user. If the EOG signal is input, the control unit 100 proceeds to step 904, and moves the key setting cursor 700 according to the EOG signal input by the user. However, if the EOG signal is not input, the control unit 100 proceeds again to step 910, and checks if the 'confirm' signal is input from the user.

If the key to which the key setting cursor 700 is set is positioned on the menu selection key 702 at step 906, the control unit 100 proceeds to step 908, and receives the user's selection of a menu. This menu selection process will be explained with reference to FIG. 10. Then, the control unit 100 proceeds to step 912, and recognizes that the key corresponding to the present cursor position is selected and thus the menu according to the selected key is selected.

FIG. 10 is a detailed flowchart illustrating the operation of the control unit 100 in the key selection process at step 908. Referring to FIG. 10, if the key setting cursor 700 is positioned on the menu selection key by the user at step 908, the control unit 100 determines if the 'confirm' signal, which corresponds to both the EMG1 signal and the EMG2 signal, is input from the EMG input unit 132 at step 1000. If the 'confirm' signal is input, the control unit 100 proceeds to step 1001, and operates to display a menu screen corresponding to the present key setting cursor 700. The displayed menu screen is illustrated in FIG. 7B. Then, the control unit 190 proceeds to step 1002, and sets the key setting cursor 700 to the position set as default from among the displayed menus. If the key setting cursor 700 is set to any menu from among the displayed menus, the control unit 100 proceeds to step 1004, and determines if the EMG signals input by the user are input from the EMG input unit 132. If the EMG signals are input, the control unit 100 proceeds to step 1006, and determines if the input EMG signals correspond to the 'confirm' signal. If only one of the EMG1 signal and the EMG2 signal is input from the user at step 1006, the control unit 10 proceeds to step 1008, and moves the key setting cursor 700 on the displayed menu screen according to the input EMG signal. Then, the control unit 100 confirms again if the EMG signals are input from the user at step 1004. Meanwhile, if the 'confirm' signal input by the user is not input from the EMG input unit 132 at step 1000, the control unit proceeds to step 902 as illustrated in FIG 9, and determines if the EOG signal is input from the user.

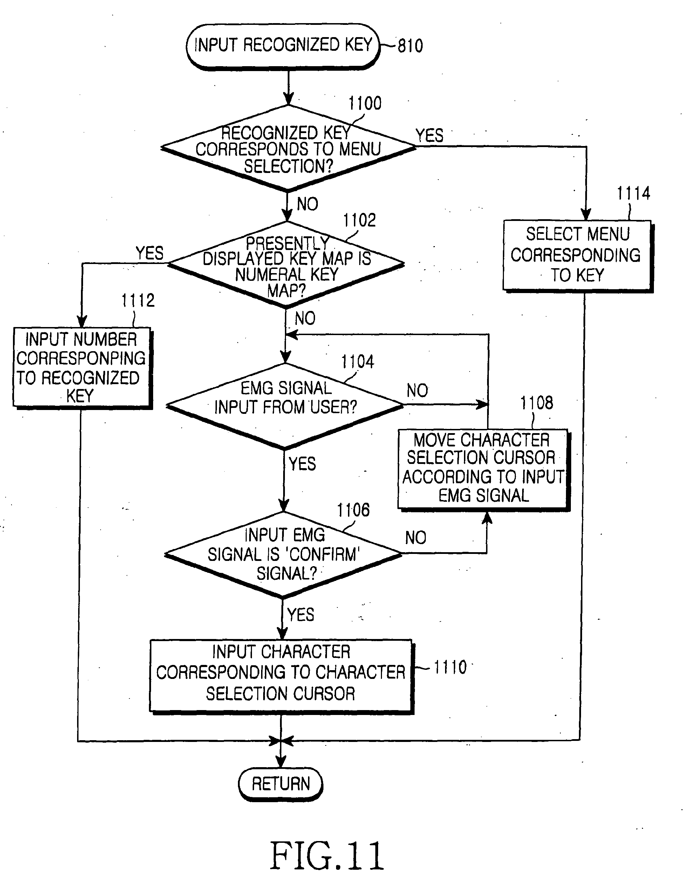

FIG. 11 is a flowchart illustrating a process of inputting the recognized key in a mobile communication terminal according to an embodiment of the present invention. Referring to FIG. 11, if a specified key selected by the user is recognized at step 808, the control unit 100 proceeds to step 1100, and confirms if the recognized key is the key corresponding to a specified menu. If the recognized key is the key corresponding to the specified menu, the control unit 100 proceeds to step 1114, and selects a menu corresponding to the key. At steps 1110 and 1114, the user may select the specified menu among the displayed menus as illustrated in FIG. 7B, for example, the user may select a schedule management menu, and record his/her schedule through the schedule management menu. If the recognized key is not the key corresponding to the specified menu, the control unit 100 proceeds to step 1102, and confirms if the displayed key map is the numeral key map. If the displayed key map is the numeral key, the control unit proceeds to step 1112, and inputs the numeral key corresponding to the key.

If the displayed key map is not the numeral key map at step 1102, the control unit 100 recognizes whether the displayed key map is English or Korean character key map, proceeds to step 1104, and loads at least one key value corresponding to the key selected at the key recognition step. Then, the control unit 100 confirms if the EMG signals are input from the user. If the EMG signal is input from the user, the control unit 100 proceeds to step 1106, and confirms if the presently input signal is the 'confirm' signal. The 'confirm' signal corresponds to the simultaneous input of the EMG1 signal and the EMG2 signal. If the 'confirm' signal is not input at step 1106, the control unit 100 confirms if the input EMG signal is the EMG1 signal or the EMG2 signal, and moves a character selection cursor according to the confirmed EMG signal.

The character selection cursor is a cursor for indicating a character selected by the user from the character key that corresponds to at least one character. In the embodiment of the present invention, a key map for selecting characters may separately be provided, or a key map for setting numeral keys may separately be provided so that only one key input may be set by one numeral key provided in the key map. However, if one key is set to correspond to one character only, a plurality of keys corresponding to the respective characters should be provided. This causes the key map to be greatly complicated. Accordingly, it is general to set the key map so that a plurality of characters correspond to one character key. In the embodiment of the present invention, the character selection cursor is provided in order for the user to confirm with the naked eye and input a character selected by the user among several characters set to one character key.

Meanwhile, if the EMG signals input from the user at step 1106 is the 'confirm' signal, the control unit 100 proceeds to step 1110, and inputs a character corresponding to the moved character selection cursor.

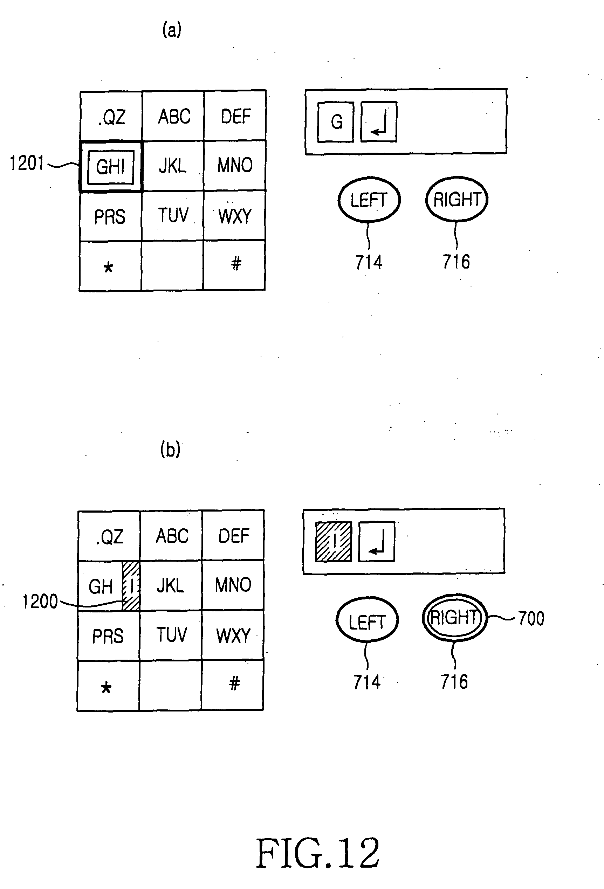

FIG. 12 are views illustrating an exemplified process of inputting a character corresponding to the character selection cursor illustrated in FIG. 11. Diagram (a) of FIG. 12 illustrates a certain key selected by the user from the key map, and diagram (b) of FIG 12 illustrates a process of selecting one character among characters of the key map selected by the user. Referring to diagram (a) of FIG. 12, it can be seen that three characters 'G', 'H', and 'I' are provided in the key 1201 selected by the user. In this case, the user has not yet input the EMG signal, and thus neither a 'left' character selection key 714 that corresponds to the EMG2 signal nor a 'right' character selection key 716 that corresponds to the EMG1 signal is input in the preview window 712. Accordingly, a character 'G' set as default among the keys selected by the user is displayed on the preview window 712.

Diagram (b) of FIG. 12 illustrates the display state that the 'right' character selection key 716 is twice selected by the user's input of the EMG2 signal twice. In this case, the character selection cursor moves from the character 'G' set as default among the characters 'G', 'H', and 'I' provided in the key selected by the user to the character 'H' and then to 'I' to finally select the character 'I' 1200. In this state, the user can input his/her desired character without limit by moving the character selection cursor until the EMG1 signal and the EMG2 signal are simultaneously input. According to the character input method of a mobile communication terminal according to the embodiment of the present invention, the user can input his/her desired character without using his/her hands.

As described above, the present invention provides a virtual screen that includes a key map and a preview window to a user through a display unit having a micro-display, recognizes and inputs a key selected according to user's biological signals sensed through a biological signal sensing unit that includes an EOG input unit and an EMG input unit for sensing and receiving the biological signals of the user as key inputs. Accordingly, the user can freely use the HMD mobile communication terminal without using his/her hands because the user can input his/her desired key to the HMD information terminal using an EOG signal produced according to the movement of the user's eyes and an EMG signal produced according to the user's biting of his/her right and left back teeth.

Although preferred embodiments of the present invention have been described, it will be apparent that the present invention is not limited thereto, but various modifications may be made therein. Particularly, although in the embodiment of the present invention, only the user's EOG signal and EMG signal are used, it will be apparent that the present invention can display a screen that matches the brain activity of the user by sensing a user's electroencephalogram (EEG) using the above-described sensors and reflecting the mentality of the user in the display screen. Through the analysis of the EEG, the mental state of the user such as mental concentration or rest, pleasure or discomfort, strain or relaxation, excitement or a state of stagnation, etc., can be analyzed.

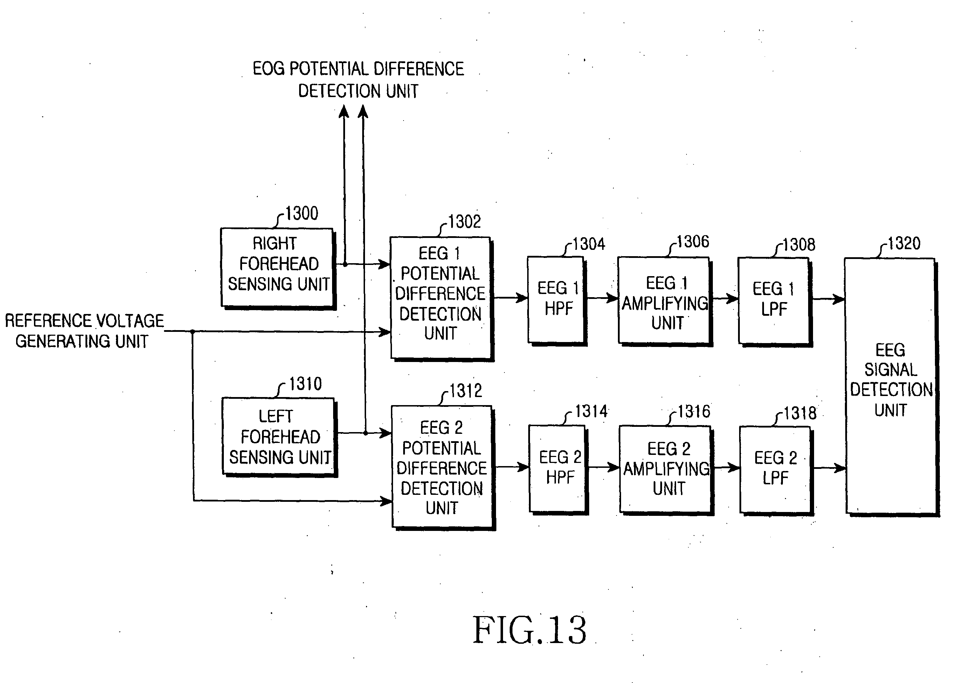

An apparatus for sensing the EEG can be included in the construction of the mobile communication terminal according to the present invention. FIG. 13 is a block diagram illustrating an electroencephalogram (EEG) sensing unit that can be added to the construction of the mobile communication terminal according to an embodiment of the present invention. Referring to FIG. 13, the user's EEG can be sensed using sensors of the front sensing unit 200 according to the present invention, that is, a sensor that is in close contact with the left forehead part of the user (hereinafter referred to as a "left forehead sensing unit"), a sensor that is in close contact with the right forehead part of the user (hereinafter referred to as a "right forehead sensing unit"), and the reference voltage generating unit 134. If the right forehead sensing unit 1300 senses the voltage produced from the right forehead part of the user, an EEG1 potential difference detection unit 1302 detects a potential difference between the sensed voltage (hereinafter referred to as a "EEG1 voltage") and a reference voltage input from the reference voltage generating unit 134 by comparing the EEG1 voltage with the reference voltage. An EEG1 HPF 1304 receives the potential difference input from the EEG1 potential difference detection unit 1302 as an EEG1 signal, and removes a noise of a DC component from the EEG1 signal. An EEG1 amplifying unit 1306 receives and amplifies the EEG1 signal from which the noise of the DC component has been removed. An EEG1 LPF 1308 receives the amplified EEG1 signal, and extracts only the EEG1 signal by removing a noise that is not a DC component from the amplified EEG1 signal. Then, an EEG signal detection unit 1320 receives and detects the extracted EEG1 signal.

If the left forehead sensing unit 1310 senses the voltage produced from the left forehead part of the user, an EEG2 potential difference detection unit 1312 detects a potential difference between the sensed voltage (hereinafter referred to as a "EEG2 voltage") and the reference voltage input from the reference voltage generating unit 134 by comparing the EEG2 voltage with the reference voltage. An EEG2 HPF 1314 receives the potential difference input from the EEG2 potential difference detection unit 1312 as an EEG2 signal, and removes a noise of a DC component from the EEG2 signal. An EEG2 amplifying unit 1316 receives and amplifies the EEG2 signal from which the noise of the DC component has been removed. An EEG2 LPF 1318 receives the amplified EEG2 signal, and extracts only the EEG2 signal by removing a noise that is not a DC component from the amplified EEG2 signal. Then, the EEG signal detection unit 1320 receives and detects the extracted EEG2 signal.

Additionally, the EEG signal detection unit 1320 analyzes a correlation between the EEG1 signal and the EEG2 signal and their frequencies by comparing the EEG1 signal and the EEG2 signal. As the correlation between the two signals becomes greater, the EEG signal detection unit 1320 inputs a signal indicating that the user is in a concentrating state to the recognition unit 126. If a fast alpha wave is revealed as a result of frequency analysis of the two signals, the EEG signal detection unit 1320 inputs a signal indicating that the user is now studying and so on to the recognition unit 126. If a slow alpha wave is revealed as a result of frequency analysis of the two signals, the EEG signal detection unit 1320 inputs a signal indicating that the user is now in meditation or that the user is taking a rest to the recognition unit 126. As a result, the present invention can provide a display screen that matches the mentality of the user by analyzing the mental state of the user such as whether the user is now resting or is now in a concentrating state according to the EEG1 signal and the EEG2 signal.

In the embodiments of the present invention, an HMD mobile communication terminal has been explained. However, it is apparent that the present invention can be used in all kinds of portable information terminals in addition to the mobile communication terminal. Also, in the embodiment of the present invention, a goggle type mobile communication terminal has been explained. However, if the constituent elements of the control unit, memory unit, etc., become thoroughly small-sized, it will be apparent that the present invention can also be applied to general glasses. Additionally, by employing an extended memory or battery through the external interface unit, the performance of the apparatus according to the present invention is greatly improved. That is, by connecting a memory pack that stores MP3 music and so on to the external interface unit, the user can listen to MP3 music from the information terminal according to the present invention. Also, by connecting the external interface to a notebook computer, a post PC, etc., the user can input a key that is selected among the keys displayed on the micro-display according to the user's movement.

While the present invention has been shown and described with reference to certain preferred embodiments thereof, it will be understood by those skilled in the art that various changes in form and details may be made therein without departing from the scope of the present invention as defined by the appended claims.

**Claims**

1. An apparatus for inputting keys using biological signals in a Head Mounted Display, HMD, mobile information terminal having an HMD, the apparatus comprising:

   a micro-display for displaying a virtual screen;
   a memory unit having a key information storage unit for storing key-map information of the virtual screen displayed by the micro-display;
   a biological signal sensing unit for sensing biological signals that include voltages produced from a face of a user;
   a recognition unit for recognizing the sensed biological signals and key information according to the recognized biological signals; and
   a control unit for recognizing the key information according to the biological signals as an input of a specified key.

2. The apparatus as claimed in claim 1, wherein the biological signal includes an electrooculogram, EOG.

3. The apparatus as claimed in claim 1, wherein the biological signal includes an electromyogram, EMG, that is produced by the clenching of left or right back teeth.

4. The apparatus as claimed in claim 1, wherein the biological signal includes an electroencephalogram, EEG.

5. The apparatus as claimed in claim 2, wherein the biological signal sensing unit includes an EOG input unit for inputting a specified key selected by the user according to a potential difference of the EOG to the control unit.

6. The apparatus as claimed in claim 3, wherein the biological signal sensing unit includes an EMG input unit for inputting a specified key selected by the user according to a potential difference of the EMG to the control unit.

7. The apparatus as claimed in claim 5, wherein the biological signal sensing unit includes both the EOG input unit and the EMG input unit.

8. The apparatus as claimed in claim 6, wherein the biological signal sensing unit includes both the EOG input unit and the EMG input unit.

9. The apparatus as claimed in claim 7 or 8, wherein the biological signal sensing unit further comprises an EEG sensing unit for receiving the EEG of the user and analyzing a mental state of the user that includes at least one of a mental concentrating state and a resting state of the user.

10. The apparatus as claimed in one of claims 1 to 9, wherein the control unit changes a background color of the virtual screen according to the EEG sensing unit.

11. The apparatus as claimed in one of claims 1 to 10, wherein the biological signal sensing unit comprises:

    a front sensing unit including sensors capable of sensing voltages produced from upper left and right parts of a nose of the user, and sensors capable of sensing voltages produced from left and right parts of a forehead of the user;
    a left side sensing unit capable of sensing a voltage produced from a left temple of the user; and
    a right side sensing unit capable of sensing a voltage produced from a right temple of the user.

12. The apparatus as claimed in claim 1, wherein the HMD mobile information terminal has a shape of goggles the frame of which is in close contact with a forehead of the user.

13. The apparatus as claimed in claim 7 or 12, wherein the sensors of the front sensing unit for sensing the voltages produced from the upper left and right parts of the nose of the user are positioned on a nose pad part of the goggles type HMD information terminal, and the sensors of the front sensing unit for sensing the voltages produced from the left and right parts of the forehead of the user are positioned on the frame of the goggles type HMD information terminal.

14. The apparatus as claimed in claim 7 or 12, wherein the left side sensing unit is positioned on a left temple part of the goggles type HMD information terminal.

15. The apparatus as claimed in claim 7 or 12, wherein the right side sensing unit is positioned on a right temple part of the goggles type HMD information terminal.

16. The apparatus as claimed in claim 14 or 15, wherein the EMG input unit comprises:

> a left EMG sensing unit for sensing a voltage produced from a left temple muscle of the user and input from the left side sensing unit;
> a left EMG potential difference detection unit for receiving the voltage produced from the left temple muscle of the user and detecting a left EMG signal;
> a right EMG sensing unit for sensing a voltage produced from a right temple muscle of the user and input from the right side sensing unit;
> a right EMG potential difference detection unit for receiving the voltage produced from the right temple muscle of the user and detecting a right EMG signal; and
> an EMG signal detection unit for outputting EMG detection signals according to the input left and right EMG signals to the recognition unit.

17. The apparatus as claimed in claim 16, wherein the EMG detection signals output when one of the left EMG signal is input, the right EMG signal is input, and both the left and right EMG signal are input.

18. The apparatus as claimed in claim 5, wherein the EOG input unit comprises:

> an EOG detection unit for receiving the voltages sensed by the front sensing unit, the left side sensing unit and the right side sensing unit, and detecting EOG signals; and
> an EOG recognition unit for recognizing position information to which eyes of the user are directed according to the detected EOG signals.

19. The apparatus as claimed in one of claims 1 to 18, wherein key information storage unit stores information related to at least one key map corresponding to different key input methods for respective mobile communication terminal manufacturers.

20. The apparatus as claimed in one of claims 1 to 18, wherein the key information storage unit stores key map information in which keys are arrange in a circle.

21. The apparatus as claimed in one of claims 1 to 20, further comprising an external interface unit that can be connected to any one of an extended memory and an extended battery.

22. The apparatus as claimed in claim 21, wherein the external interface unit is connected to a notebook Personal Computer, PC, or a post PC, and performs a key input according to the biological signals input from the user through the biological signal sensing unit and the recognition unit.

23. A method for inputting keys using biological signals in a Head Mounted Display, HMD, mobile information terminal having an HMD, the method comprising:

> (a) loading virtual screen information;
> (b) displaying a virtual screen according to the loaded virtual screen information;
> (c) determining a state of electrodes that receive biological signals produced from a face of a user;
> (d) sensing the biological signals;
> (e) recognizing keys according to the sensed biological signals; and
> (f) receiving a key value according to the key if the key is recognized.

24. The method as claimed in claim 23, wherein the virtual screen information includes information about a kind and a type of key maps set according to a user's selection.

**25.** The method as claimed in claim 24, wherein step (c) further includes the step of determining if the biological signals are in contact with a body of the user.

**26.** The method as claimed in claim 24, wherein step (c) includes the step of reporting a biological sensor error to the user by means of a message or a warning sound if the electrodes for receiving the input of the biological signals do not operate normally.

**27.** The method as claimed in claim 23, wherein the biological signal includes an electrooculogram, EOG.

**28.** The method as claimed in claim 23, wherein the biological signal includes an electromyogram, EMG, that is produced by the clenching of left or right back teeth.

**29.** The method as claimed in claim 27 or 28, wherein the biological signal includes both the EOG and the EMG.

**30.** The method as claimed in claim 29, wherein the EOG includes potential difference values between a specified reference voltage and voltages sensed by sensors capable of sensing voltages produced from upper left and right parts of a nose of the user, sensors capable of sensing voltages produced from left and right parts of a forehead of the user, and sensors capable of sensing voltages produced from left and right temples of the user.

**31.** The method as claimed in claim 30, wherein a position of a cursor, which is recognized according to the input EOG, is determined in accordance with a horizontal coordinate value and a vertical coordinate value by

$$\text{Horizontal Coordinate Value} = (V1 + V4) - (V3 + V6)$$

$$\text{Vertical Coordinate Value} = (V2 + V5) - (V3 + V4)$$

wherein V1 denotes a potential difference between the reference voltage and the voltage input from the sensor for sensing the voltage produced from the right temple of the user, V2 denotes a potential difference between the reference voltage and the voltage input from the sensor for sensing the voltage produced from the right forehead part of the user, V3 denotes a potential difference between the reference voltage and the voltage input from the sensor for sensing the voltage produced from the upper right part of the user's nose, V4 denotes a potential difference between the reference voltage and the voltage input from the sensor for sensing the voltage produced from the sensor for sensing the voltage produced from the left temple of the user, V5 denotes a potential difference between the reference voltage and the voltage input from the sensor for sensing the voltage produced from the left forehead part of the user, and V6 denotes a potential difference between the reference voltage and the voltage input from the sensor for sensing the voltage produced from the upper left part of the user's nose.

**32.** The method as claimed in claim 29, wherein step (e) further comprises the steps of:

(g) receiving an input of the EOG from the user;
(h) moving a cursor to a position recognized according to the input EOG;
(i) receiving an input of the EMG from the user; and
(j) recognizing that a key corresponding to the present cursor position is selected according to the input EMG.

**33.** The method as claimed in claim 32, wherein step (h) further comprises:

(k) determining if the cursor is positioned on a menu selection key for displaying a screen for selecting a menu;
(l) receiving an input of the EMG from the user if the cursor is positioned on the menu selection key; and
(m) recognizing the menu selected by the user according to the input EMG.

**34.** The method as claimed in claim 33, wherein in step (m) the cursor in a cursor movement direction that corresponds to the user's back teeth bitten by the user and sets the cursor to another menu if the user bites any one of the left and right back teeth.

**35.** The method as claimed in claim 33, wherein in step (m) it is determined if the menu currently set by the cursor is selected by the user if the EMG input by the user is the EMG produced when the user simultaneously bites the left and right back teeth.

**36.** The method as claimed in claim 29, wherein step (f) further comprises the steps of:

(n) loading at least one key value corresponding to the key selected at the key recognition step;
(o) determining if the EMG for selecting any one of the key values is input from the user; and
(p) receiving an input of the key value according to the input EMG as a key input selected by the user.

**37.** The method as claimed in claim 36, wherein step (p) further comprises the steps of:

(q) setting a character selection cursor set to any one of the key values according to the EMG; and
(r) receiving an input of the key set by the character selection cursor as the key input selected by the user.

**38.** The method as claimed in claim 37, wherein in step (q) the character selection cursor moves to the left if the EMG produced when the user bites the left back teeth is input, and moves the character selection cursor to the right if the EMG produced when the user bites the right back teeth is input.

**39.** The method as claimed in claim 37, wherein in step (r) an input of the key to which the character selection cursor is currently set is received as the key input selected by the user if the EMG produced when the user simultaneously bites the left and right back teeth is input.

FIG.1

FIG.2

EP 1 637 975 A1

FIG.3

EP 1 637 975 A1

FIG.4

FIG.5A

FIG.5B

FIG.5C

FIG.6

FIG.7A

110

TEXT MESSAGE — 700
— 750
AMUSING FUNCTION — 752
SCHEDULE MANAGEMENT — 754
KEY MAP SETTING — 756

FIG.7B

```
        ┌─────────┐
        │  START  │
        └────┬────┘
             │
             ▼
   ┌──────────────────────┐
   │    USER SELECTS      │──800
   │   SCREEN MODE ON     │
   └──────────┬───────────┘
             │
             ▼
   ┌──────────────────────┐
   │  LOAD VIRTUAL SCREEN │──802
   │     INFORMATION      │
   └──────────┬───────────┘
             │
             ▼
   ┌──────────────────────┐
   │ DISPLAY VIRTUAL SCREEN│──804
   └──────────┬───────────┘
             │
             ▼
   ┌──────────────────────┐
   │   CHECK BIOSENSORS   │──805
   └──────────┬───────────┘
             │
             ▼
          ╱──806──╲
        ╱  BIOLOGICAL  ╲    NO
       ╲ SIGNALS SENSED? ╱──────┐
        ╲──────────────╱        │
             │ YES              │
             ▼                  │
   ┌──────────────────────┐     │
   │    RECOGNIZE KEY     │──808 │
   │ACCORDING TO SENSED SIGNALS│ │
   └──────────┬───────────┘     │
             │                  │
             ▼                  │
   ┌──────────────────────┐     │
   │ INPUT RECOGNIZED KEY │──810 │
   └──────────┬───────────┘     │
             │                  │
             │      NO          ▼
             │◄────────── ╱──812──╲
             │          ╱USER SELECTED╲
             │          ╲VIRTUAL SCREEN╱
             │           ╲MODE OFF?   ╱
             │            ╲─────────╱
             │              │ YES
             │              ▼
             │          ┌───────┐
             │          │  END  │
             │          └───────┘
```

FIG.8

FIG.9

SELECT MENU — 908

'CONFIRM' SIGNAL INPUT FROM EMG INPUT UNIT? — 1000

NO → B

YES

DISPLAY SELECTED MENU SCREEN — 1001

SET CURSOR TO POSITION SET AS DEFAULT — 1002

EMG SIGNAL INPUTTED FROM EMG INPUT UNIT? — 1004

NO

YES

MOVE CURSOR POSITION ACCORDING TO INPUT EMG SIGNAL — 1008

INPUT SIGNAL IS 'CONFIRM' SIGNAL? — 1006

NO

YES

RETURN

FIG.10

FIG.11

(a)

| .QZ | ABC | DEF |
|------|------|------|
| GHI | JKL | MNO |
| PRS | TUV | WXY |
| * | | # |

1201

G ↵

LEFT    RIGHT

714      716

(b)

| .QZ | ABC | DEF |
|------|------|------|
| GH I | JKL | MNO |
| PRS | TUV | WXY |
| * | | # |

1200

I ↵

LEFT    RIGHT   700

714      716

# FIG.12

EOG POTENTIAL DIFFERENCE
DETECTION UNIT

1300
RIGHT
FOREHEAD
SENSING UNIT

1302
EEG 1
POTENTIAL
DIFFERENCE
DETECTION
UNIT

1304
EEG 1
HPF

1306
EEG 1
AMPLIFYING
UNIT

1308
EEG 1
LPF

1320
EEG
SIGNAL
DETECTION
UNIT

REFERENCE VOLTAGE
GENERATING UNIT

1310
LEFT
FOREHEAD
SENSING UNIT

1312
EEG 2
POTENTIAL
DIFFERENCE
DETECTION
UNIT

1314
EEG 2
HPF

1316
EEG 2
AMPLIFYING
UNIT

1318
EEG 2
LPF

FIG.13

EP 1 637 975 A1

**European Patent Office**

**EUROPEAN SEARCH REPORT**

Application Number

EP 05 01 1373

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 00/33731 A (JUNKER, ANDREW; BERG, CHRISTIAN, R) 15 June 2000 (2000-06-15)<br>* figure 1 *<br>* page 1, line 7 - line 28 *<br>* page 3, line 18 - page 4, line 37 *<br>* page 11, line 25 - line 33 *<br>----- | 1-39 | G06F3/00 |
| Y | WO 01/88680 A (SWISSCOM MOBILE AG; LAUPER, ERIC; HUBER, ADRIANO) 22 November 2001 (2001-11-22)<br>* figures 1-3 *<br>* page 7, line 24 - page 9, line 8 *<br>----- | 1-39 | |
| A | US 4 354 505 A (SHIGA ET AL) 19 October 1982 (1982-10-19)<br>* abstract *<br>----- | 9,10 | |
| A | US 2004/104896 A1 (SURAQUI DANIEL) 3 June 2004 (2004-06-03)<br>* figures 1A-1H *<br>* abstract *<br>----- | 19,20,24 | |
| A | GB 2 281 838 A (* PIONEER ELECTRONIC CORPORATION) 15 March 1995 (1995-03-15)<br>* figures 1-3,6,7A,7B *<br>* page 4, line 15 - page 5, line 9 *<br>* page 6, line 10 - page 7, line 6 *<br>* page 9, line 20 - page 11, line 18 *<br>* page 15, line 13 - line 24 *<br>----- | 32,33, 36,37 | G06F |

TECHNICAL FIELDS SEARCHED (Int.Cl.7)

The present search report has been drawn up for all claims

| Place of search | Date of completion of the search | Examiner |
|---|---|---|
| The Hague | 26 August 2005 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 05 01 1373

This annex lists the patent family members relating to the patent documents cited in  the above-mentioned European search report.
The members are as contained in the European Patent Office EDP file on
The European Patent Office is in no way liable for these particulars which are merely  given for the purpose of information.

26-08-2005

| Patent document cited in search report | | Publication date | Patent family member(s) | | Publication date |
|---|---|---|---|---|---|
| WO 0033731 | A | 15-06-2000 | AU<br>WO<br>US | 2174700 A<br>0033731 A1<br>6636763 B1 | 26-06-2000<br>15-06-2000<br>21-10-2003 |
| WO 0188680 | A | 22-11-2001 | WO<br>AU<br>EP<br>JP<br>US | 0188680 A1<br>4283400 A<br>1285326 A1<br>2003533816 T<br>2003076300 A1 | 22-11-2001<br>26-11-2001<br>26-02-2003<br>11-11-2003<br>24-04-2003 |
| US 4354505 | A | 19-10-1982 | JP | 56036941 A | 10-04-1981 |
| US 2004104896 | A1 | 03-06-2004 | NONE | | |
| GB 2281838 | A | 15-03-1995 | JP | 7049744 A | 21-02-1995 |

EPO FORM P0459

For more details about this annex : see Official Journal of the European Patent Office, No. 12/82